# EUROPEAN PATENT SPECIFICATION

(11) **EP 3 938 435 B1**
(45) Date of publication and mention of the grant of the patent: **08.02.2023**
(21) Application number: 20709578.7
(22) Date of filing: 09.03.2020
(51) Int. Cl.: C08K 5/00, C08K 5/5313

(54) **A COMPOSITION COMPRISING A THERMOPLASTIC POLYISOCYANATE POLYADDITION PRODUCT AND A FLAME RETARDANT**
ZUSAMMENSETZUNG MIT EINEM THERMOPLASTISCHEN POLYISOCYANAT-POLYADDITIONSPRODUKT UND EINEM FLAMMSCHUTZMITTEL
COMPOSITION COMPRENANT UN PRODUIT DE POLYADDITION DE POLYISOCYANATE THERMOPLASTIQUE ET UN RETARDATEUR DE FLAMME

(30) Priority: 14.03.2019 EP 19162907
(43) Date of publication of application: 19.01.2022
(73) Proprietor: BASF SE, 67056 Ludwigshafen am Rhein (DE)
(72) Inventor: HENZE, Oliver Steffen, 49448 Lemförde (DE); UHLHORN, Frank, 49448 Lemförde (DE)
(74) Representative: BASF IP Association
(86) International application number: PCT/EP2020/056153
(87) International publication number: WO 2020/182707

(56) References cited:
- WO-A1-2017/032659
- US-A1- 2017 066 906
- US-B2- 8 479 887

## Description

The current invention is directed to a composition comprising a thermoplastic polyisocyanate polyaddition product and a phosphinate flame retardant.

Thermoplastic polyurethanes with flame retardants are widely described, see e.g. WO 2014/016406, WO 2015/128213, WO2017/032658 or WO 2017/032659.

More and more very specific requirements profiles for very specific applications are requested. US 8,479,887 B2 claims an elevator system in which a very specific thermoplastic material is used. Very similarly US 8,387,780 B2 claims a load bearing member with melamine-based adhesion enhancer.

However, the requirements for flame retardancy are constantly growing and very specific requirement profiles are created for various applications.

The problem to be solved with the current invention was to find a composition thermoplastic polyaddition product with high flame retardancy accompanied with good mechanical properties, preferable for the use in flexible assemblies with high loads.

Surprisingly this problem could be solved with the composition according to claim1.

The current invention in a first embodiment is directed to a composition comprising a thermoplastic polyisocyanate polyaddition product and a flame retardant, and the composition does not comprise melamine cyanuric acid, wherein the polyaddition product is obtained by reacting
a. a substance reactive with isocyanate
b. a polyisocyanate
c. a chain extender
   eventually in the presence of
d. a catalyst
e. an additive
wherein the flame retardant comprises a phosphinate.

"Does not comprise melamine cyanuric acid" means that cyanuric acid is not comprised to an extend to result in efficient flame retardant properties. In preferred embodiments melamine cyanuric acid is comprised in the composition with less than 5 weight % referring to the whole composition, preferably less than 3 weight %, more preferably less than 1 weight %, more preferably less than 0.5 weight %, and most preferably less than 0.1 weight %.

In a second embodiment composition according to embodiment 1 or its preferred embodiments the phosphinate is comprised with to 30 weight % referring to the whole composition, preferably 5 weight % to 25 weight %, more preferably 5 weight % to 20 weight %, more preferably 5 weight % to 19 weight %, more preferably 5 weight % to 18 weight %, most preferably 10 weight % to 15 weight %.

A phosphinate is the salt of phosphinic acid or phosphinic acid esters, preferably having the general formula R₁R₂(P=O) OMe. Me in this formula is a metal, preferably selected from the group consisting of aluminum, calcium, or zinc, most preferred is aluminum.

In preferred embodiments, the moieties R₁ and R₂ are either aliphatic or aromatic, and more preferably have from 1 to 20 carbon atoms, more preferred 1 to 10 carbon atoms, even more preferred 1 to 3 carbons. It is preferable that at least one of the moieties R₁ or R₂ is aliphatic, and it is more preferable that both moieties R₁ and R₂ are aliphatic, also referred to as dialkylphosphinate. The aliphatic moieties R₁ and R₂ are preferably selected form group consisting of methyl-, ethyl-, propyl-, butyl-, pentyl-, hexyl-, heptyl- octyl-, nonyl-, and dodecyl-radical, or are mixtures thereof, more preferably from the group consisting of methyl-, ethyl-, and propylradical, and it is very particularly preferable that R₁ and R₂ are ethyl-radicals.

The most preferred phosphinate is aluminum diethyl phosphinate.

The flame retardant is used in the form of single substance or in mixtures of several substances of either the same kind of flame retardants or different kind of flame retardants in the composition. In a preferred embodiment the content of the phosphinate referred to the whole flame retardant is between 50 weight % and 100 weight %, more preferred between 70 weight % and 100 weight %, more preferred between 90 weight % and 100 weight %, and even more preferred between 95 weight % and 100 weight %. In another preferred embodiment the flame retardant consists of phosphinate, preferably as outlined above, most preferred aluminum diethyl phosphinate.

The content of the flame retardant in the composition is in a preferred embodiment comprising all the features of any of the embodiments as outlined above or its preferred embodiments is 5 weight% to 20 weight % referring to the whole composition, preferably 8 weight % to 15 weight %.

The polyisocyanate polyaddition product, in a preferred embodiment is thermoplastic polyurethane (TPU). It is prepared preferably by reacting (a) isocyanates with (b) isocyanate-reactive compounds, also referred to as polyol, in a preferred embodiment having a number average molecular weight of from 0.5 × 10³ g /mol to 100 × 10³ g /mol and, if desired (c) chain extender having a molecular weight of from 0.05 × 10³ g /mol to 0.499 × 10³ g /mol, if desired in the presence of (d) catalysts and/or (e) conventional auxiliaries and/or additives.

The thermoplastic polyurethane is preferably in the form of a powder or granules.

The components (a) isocyanate, (b) isocyanate reactive compound, in a preferred embodiment polyol, and (c) chain extender, are addressed individually or together as build-up components. The build-up components, the catalyst, and/or the usual auxiliaries and/or additives all together are also called input materials.

In order to adjust the hardness and melt index of the TPU, the molar ratios of the quantities of the structural components (b) and (c) used can be varied, whereby the hardness and melt viscosity increase with increasing content of chain extender (c), while the melt index decreases.

The composition comprising the polyisocyanate polyaddition product, preferably the thermoplastic polyurethane, preferably has a hardness from 80 Shore A to 60 Shore D. In a preferred embodiment the hardness of the composition is between 80 Shore A and 54 Shore D. Very preferred, the Hardness is 85 Shore A to 50 Shore D. In one preferred embodiment the hardness is 85 Shore A, in yet another preferred embodiment 95 Shore A and in yet another embodiment 50 Shore D. The Shore hardness is preferably measured according to DIN ISO 7619-1.

In preferred examples the molar ratios of the polyol (b) to the chain extender(c) being in the range of 1:5.5 to 1:15, preferably 1:6 to 1:12. In other preferred embodiments wherein the polyurethane polyaddition product is derived from polytetrahydrofuran (PTHF), preferably with a number average molecular weight of 1.0 × 10³ g/mol, and 1,4-butane diol the molar ratio of the PTHF to the 1,4-butanediol is preferably 1 : 2.5, 1 . 1:2.2 or 1:1.5.

In order to prepare the polyisocyanate polyaddition product, preferably the TPU the build-up components are preferably reacted in the presence of a catalyst (d) and optionally auxiliaries and/or additives (e) in such quantities that the equivalent ratio of NCO groups of the diisocyanates (a) to the sum of the hydroxyl groups of the components (b) and (c) is 0.95 to 1.10:1, preferably 0.98 to 1.08:1 and in particular approximately 1.0 to 1.05:1.

Polyisocyanate polyaddition product, preferably thermoplastic polyurethane, has preferably a weight-average molecular weight of at least 0.1×10⁶ g/mol, preferably of at least 0.4 × 10⁶ g/mol and in particular greater than 0.6 ×10⁶ g/mol. The upper limit for the weight-average molecular weight of TPU is generally determined by the processability and the desired range of properties. Preferably the number average molecular weight of TPU does not exceed 0.8 ×10⁶ g/mol. The mean molecular weights given above for the TPU as well as for the build-up components (a) and (b) are the weight averages determined by gel permeation chromatography.

The preferred organic isocyanate (a) is aliphatic, cycloaliphatic, araliphatic and/or aromatic isocyanate, further preferred is tri-, tetra-, penta-, hexa-, hepta- and/or octamethylene diisocyanate, 2-methyl-pentamethylene 1,5-diisocyanate, 2-ethyl-butylene-1,4-diisocyanate, 1,5-pentamethylene diisocyanate, 1,4- butylene-diisocyanate, 1-isocyanato-3,3,5-trimethyl-5-isocyanatomethyl-cyclohexane (isophorone diisocyanate, IPDI), 1,4- bis(isocyanatomethyl)cyclohexane and/or 1,3-bis(isocyanatomethyl)cyclohexane (HXDI), 2,4-paraphenylene diisocyanate (PPDI), 2,4-tetramethylene xylene diisocyanate (TMXDI), 4,4'-, 2,4'- and 2,2'-dicyclohexylmethane diisocyanate (H12 MDI), 1,6-hexamethylene diisocyanate (HDI),1,4-cyclohexane diisocyanate, 1-methyl-2,4- and/or -2,6-cyclohexane diisocyanate, 2,2'-, 2,4'- and/or 4,4'-diphenylmethane diisocyanate (MDI), 1,5-naphthylene diisocyanate (NDI), 2,4- and/or 2,6-toluene diisocyanate (TDI), diphenylmethane diisocyanate, 3,3'-dimethyl-diphenyl diisocyanate, 1,2-diphenylethane diisocyanate and/or phenylene diisocyanate, or is a mixture thereof

Preferred is 2,2'-, 2,4'-and/or 4,4'-diphenylmethane-diisocyanate (MDI), especially preferred is 4,4'-diphenylmethane diisocyanate.

### Polyol

The isocyanate-reactive compound (b) has on statistical average at least 1.8 and at most 3.0 Zerewitinoff-active hydrogen atoms, this number is also referred to as the functionality of the isocyanate-reactive compound (b) and indicates the quantity of the isocyanate-reactive groups of the molecule calculated theoretically down to one molecule from a quantity of substance. The functionality is preferred between 1.8 and 2.6, further preferred between 1.9 and 2.2 and especially 2.

Compounds (b) reactive towards isocyanates are preferably those having a molecular weight between 0.500 g/mol and 8 ×10³ g/mol, preferably 0.7 × 10³ g/mol to 6.0 × 10³ g/mol, in particular 0.8 × 10³ g/mol to 4.0 × 10³ g/mol.

The isocyanate-reactive compound (b) preferably has a reactive group selected from the hydroxyl group, the amino group, the mercapto group or the carboxylic acid group. The preferred group is the hydroxyl group. These compounds are also referred to as polyols. The polyol (b) preferably is selected from the group consisting of polyesterols, polyetherols or polycarbonate diols, more preferred from the group consisting of polyether polyol and polycarbonate. Particularly preferred is polyether polyol.

Preferred polyols are polyether polyols, preferably polyether diols, further preferred are those based on ethylene oxide, propylene oxide and/or butylene oxide.

Another preferred polyether is polytetrahydrofuran (PTHF). In a preferred embodiment the polytetrahydrofuran has a number average molecular weight between 0,6 × 10³ g/ mol and 2.5 × 10³ g/mol, more preferably between 0,8 × 10³ g/ mol and 1,4 × 10³ g/ mol, even more preferably between 0,9 × 10³ g/ mol and 1,1 × 10³ g/ mol, and most preferably 1,0 × 10³ g/mol. In another preferred embodiment the number average molecular weight of the PTHF is between 1,6 × 10³ g/ mol and 2,4 × 10³ g/ Mol, even more preferred between 1,9 × 10³ g/ mol and 2,1 × 10³ g/ mol, and most preferably 2,0 × 10³ g/Mol.

The number average molecular weight Mn in the context of this invention is preferably determined according to DIN 55672-1.

In another preferred embodiment the compounds (b) which is reactive towards isocyanates, is a polycarbonate diol, preferably an aliphatic polycarbonate diol. Preferred polycarbonate diols are, for example, polycarbonate diols based on alkane diols. Preferred polycarbonate diols are strictly difunctional OH-functional polycarbonate diols, preferably strictly difunctional OH-functional aliphatic polycarbonate diols. Preferred polycarbonate diols are based on butanediol, pentanediol or hexanediol, in particular 1,4-butanediol, 1,5-pentanediol, 1,6-hexanediol, 3-methylpentane-(1,5)-diol, or are mixtures thereof; particular preferred is 1,4-butanediol, 1,5-pentanediol, 1,6-hexanediol, or mixtures thereof. Very preferred are polycarbonate diols based on 1,4-butanediol and 1,6-hexanediol, polycarbonate diols based on 1,5-pentanediol and 1,6-hexanediol, polycarbonate diols based on 1,6-hexanediol, and mixtures of two or more of these polycarbonate diols.

Preferably, the polycarbonate diols used have a number average molecular weight Mn in the range from 0.5 × 10³ to 4.0 × 10³ g/mol, determined via GPC, preferably in the range from 0.8 × 10³ g/ mol to 2.2 × 10³ g/mol, particularly preferred in the range from 0.9 × 10³ g/mol to 1.1 × 10³ g/mol or 1.9 × 10³ g/mol to 2.1 × 10³ g/mol.

In one preferred embodiment the polyol is a mixture of two or more polyols. In one preferred embodiment it is a mixture of at least one polyether polyol and at least one polycarbonate diol. In other preferred embodiments the polyol is a single polyol.

### Chain Extender

In preferred embodiments a chain extender (c) is used in the synthesis of the polyisocyanate polyaddition product, preferably the thermoplastic polyurethane. The chain extender is preferably aliphatic, araliphatic, aromatic and/or cycloaliphatic compounds with a molecular weight of 0.05 × 10³ g/mol to 0.499 × 10³ g/mol, preferably with 2 groups reactive with isocyanate, which are also referred to as functional groups. The chain extender is either a single chain extender or a mixture of at least two chain extenders.

In a preferred embodiment the chain extender (c) is preferably at least one chain extender selected from the group consisting of 1,2-ethylene glycol, 1,2-propanediol, 1,3-propanediol, 1,4-butanediol, 2,3-butanediol, 1,5-pentanediol, 1,6-hexanediol, diethylene glycol, dipropylene glycol, 1,4-cyclohexanediol, 1,4-dimethanol cyclohexane, neopentylglycol and hydroquinone bis (beta-hydroxyethyl) ether (HQEE). Chain extenders selected from the group consisting of 1,2-ethylene glycol, 1,3-propanediol, 1,4-butanediol and 1,6-hexanediol are particularly suitable. Particularly preferred chain extenders are 1,3-propanediol and 1,4-butanediol. In one preferred embodiment the chain extender is 1,3 propanediol.

### Catalyst

In preferred embodiment a catalyst (d) is used with the build-up components. These are in particular catalysts which accelerate the reaction between the NCO groups of the isocyanates (a) and the isocyanate-reactive compound (b), preferably with hydroxyl groups and, if used, the chain extender (c). Preferred catalysts are tertiary amines, especially triethylamine, dimethylcyclohexylamine, N-methylmorpholine, N,N'-dimethylpiperazine, 2-(dimethylaminoethoxy)-ethanol, diazabicyclo-(2,2,2)-octane. In another preferred embodiment, the catalysts are organic metal compounds such as titanium acid esters, iron compounds, preferably ferric acetylacetonate, tin compounds, preferably those of carboxylic acids, particularly preferred tin diacetate, tin dioctoate, tin dilaurate or tin dialkyl salts, further preferred dibutyltin diacetate, dibutyltin dilaurate, or bismuth salts of carboxylic acids, preferably bismuth decanoate.

Particularly preferred catalysts are: tin dioctoate, bismuth decanoate, titanic acid ester, or a mixture thereof.

The catalyst (d) is preferably used in quantities of 0,0001 to 0,1 parts by weight per 100 parts by weight of the composition.

### Auxiliaries

In addition to catalysts (d), conventional auxiliaries (e) can also be added to the components (a) to (c). Preferred examples include surface-active substances, fillers, flame retardants, nucleating agents, oxidation stabilizers, lubricating and demolding aids, dyes and pigments, if necessary stabilizers, preferably against hydrolysis, light, heat or discoloration, inorganic and/or organic fillers, reinforcing agents and/or plasticizers.

Stabilizers in the sense of this invention are additives which protect a plastic or a plastic mixture against harmful environmental influences. Examples are primary and secondary antioxidants, sterically hindered phenols, hindered amine light stabilizers, UV absorbers, hydrolysis inhibitors, quenchers and flame retardants. Examples of commercial stabilizers are given in Plastics Additives Handbook, 5th Edition, H. Zweifel, ed., Hanser Publishers, Munich, 2001 ([1]), p.98-S136.

In a preferred design, the UV absorbers have a number average molecular weight greater than 0.3 × 10³ g/mol, in particular greater than 0.39 × 10³ g/mol. Furthermore, the preferred UV absorbers should have a molecular weight not exceeding 5 × 10³ g/mol, particularly preferred not exceeding 2 × 10³ g/mol.

The group comprising cinnamates, oxanilides and benzotriazoles is particularly suitable as UV absorbers, benzotriazoles being particularly preferred. Examples of particularly suitable benzotriazoles are Tinuvin^{®}- 213, Tinuvin^{®}- 234, Tinuvin^{®} 312, Tinuvin^{®}- 571, Tinuvin^{®}- 384 and Eversorb^{®} 82.

Usually the UV absorbers are added in quantities of 0.01 wt.% to 5 wt.% based on the total TPU mass, preferably 0.1 wt.% to 2.0 wt.%, in particular 0.2 wt.% to 0.5 wt.%.

Often a UV stabilization based on an antioxidant and a UV absorber as described above is not sufficient to guarantee a good stability of the TPU against the harmful influence of UV rays. In this case, in addition to the antioxidant and the UV absorber, a Hindered-Amine Light Stabiizer (HALS) can be added to the TPU according to the invention. The activity of HALS compounds is based on their ability to form nitroxyl radicals, which interfere with the mechanism of oxidation of polymers. HALS are considered highly efficient UV stabilizers for most polymers.

HALS compounds are well known and commercially available. Examples of commercially available HALS stabilizers can be found in Plastics Additive Handbook, 5th edition, H. Zweifel, Hanser Publishers, Munich, 2001, pp. 123-136.

Particularly preferred Hindered Amine Light Stabilizers are bis-(1,2,2,6,6-penta¬methylpiperidyl) sebacat (Tinuvin^{®} 765, Ciba Spezialitätenchemie AG) and the condensation product of 1-hydroxyethyl-2,2,6,6-tetramethyl-4-hydroxypiperidine and succinic acid (Tinuvin^{®} 622). In particular, the condensation product of 1-hydroxyethyl-2,2,6,6-tetramethyl-4-hydroxypiperidines and succinic acid (Tinuvin^{®} 622) is preferred if the titanium content of the finished product is less than 150 ppm, preferably less than 50 ppm, in particular less than 10 ppm, based on the components used.

HALS compounds are preferably used in a concentration of from 0.01 wt.% to 5 wt.%, particularly preferably from 0.1 wt.% to 1 wt.%, in particular from 0.15 wt.% to 0.3 wt.%, based on the total weight of the thermoplastic polyurethane, based on the composition components used.

A particularly preferred UV stabilization contains a mixture of a phenolic stabilizer, a benzotriazole and a HALS compound in the preferred amounts described above.

Further information on the above-mentioned auxiliaries and additives can be found in the technical literature, e.g. Plastics Additives Handbook, 5th edition, H. Zweifel, ed., Hanser Publishers, Munich, 2001.

In another preferred embodiment the composition comprises a filler, chemically bonded at least with part of the composition. Preferably the filler comprises a polyhedral oligomeric silsesquioxane. In another embodiment the filler is carbon, preferably carbon nanotubes or carbon fiber. The filler preferably has an extension of less than 1 × 10⁻⁶meter, preferably less than 0.5 × 10⁻⁶meter, more preferably less than 1 × 10⁻⁷meter, less than 0.5 × 10⁻⁷meter, less than 1 × 10⁻⁸meter, less than 0.5 × 10⁻⁸meter, most preferably less than 1 × 10⁻⁹meter.

### Production

The polyisocyanate polyaddition product, preferably the thermoplastic polyurethane can be produced discontinuously or continuously according to the known processes, e.g. using reaction extruders, using the belt process, and applying the "one shot" process or the prepolymer process, preferably the "one-shot" process. In the "one-shot" process, the building components (a), (b), and eventually the chain extender (c) which come to the reaction are mixed with each other. This is done either in succession or simultaneously, in preferred embodiment in the presence of the catalyst (d) and/or auxiliary (e). In the extruder process, the structural components (a), (b) eventually the chain extender (c) and, in preferred forms, also the catalyst (d) and/or the auxiliary (e) are mixed. The mixing is done preferably at temperatures between 100°C and 280°C, preferably between 140°C and 250°C. The polyurethane obtained preferably is in the form of a granulate or a powder.

The auxiliaries in one embodiment are added during synthesis of the polyisocyanate polyaddition product, preferably the thermoplastic polyurethane. In another preferred embodiment the auxiliary (e) is added to the polyisocyanate polyaddition product, preferably the thermoplastic polyurethane after its synthesis, preferably in an extruder.

The mixture comprising the polyisocyanate polyaddition product, preferably the thermoplastic polyurethane eventually at least one auxiliary and in preferred embodiments further polymers is also referred to as composition

A twin-screw extruder is preferred, as the twin-screw extruder operates with positive conveying and thus allows a more precise setting of the temperature and output quantity on the extruder.

### Use

The composition is preferably used for the production of articles by injection moulding, calendering, powder sintering or extrusion articles. The composition in a preferred embodiment is injection moulded, calendered, powder sintered, or extruded to form an article.

Yet another aspect of the invention is the article produced with a composition or as obtained by the process described above.

In preferred embodiments the article is selected from group consisting of, coating, damping element, bellows, foil, fibre, moulded body, roofing or flooring for buildings and transport, non-woven fabric, preferably gasket, roll, shoe sole, hose, cable, cable connector, cable sheathing, pillow, laminate, profile, strap, saddle, foam, by additional foaming of the composition, plug connection, trailing cable, solar module, lining in automobiles, wiper blade, elevator load bearing members, roping arrangements, drive belts for machines, passenger conveyer, handrails for passenger conveyers, modifier for thermoplastic materials. or a mixture thereof. Modifier means a substance that influences the properties of another material and is preferably in the form of a powder or granules.

Another aspect of this invention is a foamed bead made of the composition or its preferred embodiments. These foamed beads and also molded bodies produced therefrom may be used in various applications (see e.g. WO 94/20568, WO 2007/082838 A1, WO2017030835, WO 2013/153190 A1, WO2010010010).

In a very preferred embodiment, the composition is used for a flexible load bearing assembly, preferably for elevator load bearing assembly, roping arrangements, drive belts for machines, for passenger conveyor, preferably for handrails for passenger conveyors. Such assemblies comprise at least one cord, in other preferred embodiments at least two cords, which are partly or completely covered by the composition of this invention.

### Examples

### Example 1

The following tables list the compositions in which the individual ingredients are listed in weight proportions (GT). The compounds were each produced with a twin-screw extruder type ZE 40 A from Berstorff with a processing section length of 35 D divided into 10 housings. The pelletizing was carried out using a standard underwater pelletizer from Gala (UWG).

The compounds were extruded in a single-screw extruder type Arenz with a three-zone screw with mixing section (screw ratio 1:3) to films with a thickness of 1.6 mm. The density, Shore hardness, tensile strength, tear propagation strength, abrasion and elongation at break of the test specimens were measured. The results are summarized in the following table 1 (see Example 3).

### Example 2:

TPU 1 with a Shore hardness of 90A is based on Polytetrahydrofuran polyol (PTHF) with a number average molecular weight of 1000 g/mol, 1,4-butanediol und 4,4'-diisocyanatodicyclohexylmethane, commercially available as Elastollan^{®} 1190A10 from of BASF Polyurethanes GmbH, Germany.

TPU 2 with a Shore hardness of 48D is based on Polytetrahydrofuran polyol (PTHF) with a number average molecular weight of 1000 g/mol, 1,3-propanediol und 4,4'-diisocyanatodicyclohexylmethane, commercially available as Ellastollan^{®} 1598A10 from of BASF Polyurethanes GmbH, Germany.

Aluminumdiethylphosphinate (ADP), CAS#: 225789-38-8 water content less than 0,2 weight %, average particle size (D50) 20-40 µm, commercially available as Exolit^{®} OP 1230 from Clariant Produkte GmbH, Germany.

### Example 3

**Table 1**

| This table indicates the composition of the material and its respective mechanical properties. | | | | | | |
|---|---|---|---|---|---|---|
| Material | | | A | B | C | D |
| TPU 1 | | | 100 | 90 | | |
| TPU 2 | | | | | 100 | 90 |
| ADP | | | | 10 | | 10 |
| | | | | | | |
| Dichte | [g/cm³] | DIN EN ISO 1183-1, A | 1,13 | 1,16 | 1,15 | 1,17 |
| hardness [Shore A] | [A] | DIN 53505 | 90 | 95 | | |
| hardness [Shore D] | [D] | DIN ISO 7619-1 | | | 48 | 50 |
| tensil strength | [MPa] | DIN EN ISO 527 | 50 | 45 | 50 | 45 |
| elongation at break | [%] | DIN EN ISO 527 | 550 | 490 | 500 | 460 |
| tear resistance | [kN/m] | DIN ISO 34-1, B (b) | 85 | 70 | 125 | 100 |
| abrasion | [mm]³ | DIN 53516 | 25 | 60 | 35 | 45 |

### Example 4

The test pieces for the cone measurement with dimensions of 200x150x5mm were injection molded on an Arburg 520S with a screw diameter of 30 mm. These plates were then sawn to the size required for the cone measurement (100x100x5mm).

To evaluate the flame retardancy, a 5 mm thick specimen is tested horizontally at a radiation intensity of 35kW/m² in the Cone calorimeter according to ISO 5660 Part 1 and Part 2 (2002-12).

The results are summarized in Table 2. For mixture B compared to mixture A, the total heat release (THE) and peak of heat release rate (PHRR) were significantly reduced.

**Table 2**

| | A | B |
|---|---|---|
| THE | 175 | 135 |
| PHRR | 2850 | 750 |
| Time to ignition | 75 | 80 |

## Claims

1. A composition comprising a thermoplastic polyisocyanate polyaddition product and a flame retardant, and the composition does not comprise melamine cyanuric acid, wherein the polyaddition product is obtained by reacting
a. a substance reactive with isocyanate
b. a polyisocyanate
c. a chain extender
eventually in the presence of
d. a catalyst
e. an additive
wherein the flame retardant comprises a phosphinate.

2. A composition according to claim 1, wherein the phosphinate is comprised with 5 to 30 weight % referring to the whole composition, preferably 5 weight % to 25 weight %, more preferably 5 weight % to 20 weight %, more preferably 5 weight % to 19 weight %, more preferably 5 weight % to 18 weight %, most preferably 10 weight % to 15 weight %.

3. A composition according to any of claims 1 to 2, wherein the flame retardant is a phosphinate.

4. A composition according to any of claims 1 to 3, wherein the phosphinate is an aluminum phosphinate.

5. A composition according to any of claims 1 to 3, wherein the phosphinate is an aluminum dialkyl-phosphinate.

6. A composition according to claim 5, wherein the alky of the phosphinate is independently selected from the group consisting of methyl-, ethyl-, propyl, butyl-, pentyl-, hexyl-, heptyl- octyl-, nonyl-, and dodecyl-.

7. A composition according to any of claims 1 to 3, wherein the phosphinate is aluminum diethyl phosphinate.

8. A composition according to any of the claims 1 to 7, wherein the polyisocyanate is diphenylmethane-4,4'-diiscocyanate.

9. A composition according to any of the claims 1 to 8, wherein the phosphinate is the only flame retardant in the composition.

10. A composition according to any of the claims 1 to 9, wherein the substance reactive with isocyanate is a polyetherdiol.

11. A composition according to claim 10 wherein the polyetherdiol is polytetrahydrofuran or polycarbonate diol.

12. A composition according to any of the claims 1 to 11, wherein the chain extender is selected from the group consisting of 1,3-propanediol, 1,4-butanediol, 1,5-petanediol, 1,6-hexanediol, more preferably the chain extender is 1,3-propanediol or 1,4-butanediol, most preferably 1,3-propanediol.

13. Use of a composition according to any of claims 1 to 12 in an elevator system.

14. Process of injection molding, calendering, powder sintering, or extruding the composition of any of claims 1 to 12 to form an article.

15. Article comprising a composition according to any of claim 1 to 12 or obtained by the process according to claim 14.

## Patentansprüche

1. Zusammensetzung, umfassend ein thermoplastisches Polyisocyanat-Polyadditionsprodukt und ein Flammschutzmittel, wobei die Zusammensetzung keine Melamin-Cyanursäure umfasst, wobei das Polyadditionsprodukt erhalten wird durch Umsetzen von
a. einer gegenüber Isocyanat reaktiven Substanz,
b. einem Polyisocyanat,
c. einem Kettenverlängerungsmittel,
gegebenenfalls in Gegenwart von
d. einem Katalysator,
e. einem Additiv,
wobei das Flammschutzmittel ein Phosphinat umfasst.

2. Zusammensetzung nach Anspruch 1, wobei das Phosphinat in einer Menge von 5 bis 30 Gew.-%, bezogen auf die gesamte Zusammensetzung, vorzugsweise 5 Gew.-% bis 25 Gew.-%, weiter bevorzugt 5 Gew.-% bis 20 Gew.-%, weiter bevorzugt 5 Gew.-% bis 19 Gew.-%, weiter bevorzugt 5 Gew.-% bis 18 Gew.-%, ganz besonders bevorzugt 10 Gew.-% bis 15 Gew.-%, enthalten ist.

3. Zusammensetzung nach einem der Ansprüche 1 bis 2, wobei es sich bei dem Flammschutzmittel um ein Phosphinat handelt.

4. Zusammensetzung nach einem der Ansprüche 1 bis 3, wobei es sich bei dem Phosphinat um ein Aluminiumphosphinat handelt.

5. Zusammensetzung nach einem der Ansprüche 1 bis 3, wobei es sich bei dem Phosphinat um ein Aluminiumdialkylphosphinat handelt.

6. Zusammensetzung nach Anspruch 5, wobei das Alkyl des Phosphinats unabhängig aus der Gruppe bestehend aus Methyl-, Ethyl-, Propyl-, Butyl-, Pentyl-, Hexyl-, Heptyl-, Octyl-, Nonyl- und Dodecyl- ausgewählt ist.

7. Zusammensetzung nach einem der Ansprüche 1 bis 3, wobei es sich bei dem Phosphinat um Aluminiumdiethylphosphinat handelt.

8. Zusammensetzung nach einem der Ansprüche 1 bis 7, wobei es sich bei dem Polyisocyanat um Diphenylmethan-4,4'-diisocyanat handelt.

9. Zusammensetzung nach einem der Ansprüche 1 bis 8, wobei das Phosphinat das einzige Flammschutzmittel in der Zusammensetzung ist.

10. Zusammensetzung nach einem der Ansprüche 1 bis 9, wobei es sich bei der gegenüber Isocyanat reaktiven Substanz um ein Polyetherdiol handelt.

11. Zusammensetzung nach Anspruch 10, wobei es sich bei dem Polyetherdiol um Polytetrahydrofuran oder Polycarbonatdiol handelt.

12. Zusammensetzung nach einem der Ansprüche 1 bis 11, wobei das Kettenverlängerungsmittel aus der Gruppe bestehend aus 1,3-Propandiol, 1,4-Butandiol, 1,5-Pentandiol und 1,6-Hexandiol ausgewählt ist, wobei es sich bei dem Kettenverlängerungsmittel weiter bevorzugt um 1,3-Propandiol oder 1,4-Butandiol, ganz besonders bevorzugt 1,3-Propandiol, handelt.

13. Verwendung einer Zusammensetzung nach einem der Ansprüche 1 bis 12 in einem Aufzugsystem.

14. Verfahren zum Spritzgießen, Kalandrieren, Pulversintern oder Extrudieren der Zusammensetzung nach einem der Ansprüche 1 bis 12 zu einem Gegenstand.

15. Gegenstand, umfassend eine Zusammensetzung nach einem der Ansprüche 1 bis 12 oder eine durch das Verfahren nach Anspruch 14 erhaltene Zusammensetzung.

## Revendications

1. Composition comprenant un produit de polyaddition de polyisocyanate thermoplastique et un agent ignifugeant, et la composition ne comprenant pas de mélamine acide cyanurique, le produit de polyaddition étant obtenu par mise en réaction
a. d'une substance réactive avec un isocyanate
b. d'un polyisocyanate
c. d'un extenseur de chaînes
éventuellement en la présence
d. d'un catalyseur
e. d'un additif
l'agent ignifugeant comprenant un phosphinate.

2. Composition selon la revendication 1, le phosphinate étant compris en une quantité de 5 à 30 % en poids par rapport à la composition entière, préférablement de 5 % en poids à 25 % en poids, plus préférablement de 5 % en poids à 20 % en poids, plus préférablement de 5 % en poids à 19 % en poids, plus préférablement de 5 % en poids à 18 % en poids, le plus préférablement de 10 % en poids à 15 % en poids.

3. Composition selon l'une quelconque des revendications 1 à 2, l'agent ignifugeant étant un phosphinate.

4. Composition selon l'une quelconque des revendications 1 à 3, le phosphinate étant un phosphinate d'aluminium.

5. Composition selon l'une quelconque des revendications 1 à 3, le phosphinate étant un dialkyl-phosphinate d'aluminium.

6. Composition selon la revendication 5, l'alkyle du phosphinate étant indépendamment choisi dans le groupe constitué par méthyl-, éthyl-, propyle, butyl-, pentyl-, hexyl-, heptyl-, octyl-, nonyl- et dodécyl-.

7. Composition selon l'une quelconque des revendications 1 à 3, le phosphinate étant le diéthyl-phosphinate d'aluminium.

8. Composition selon l'une quelconque des revendications 1 à 7, le polyisocyanate étant le 4,4'-diisocyanate de diphénylméthane.

9. Composition selon l'une quelconque des revendications 1 à 8, le phosphinate étant le seul agent ignifugeant dans la composition.

10. Composition selon l'une quelconque des revendications 1 à 9, la substance réactive avec un isocyanate étant un polyétherdiol.

11. Composition selon la revendication 10, le polyétherdiol étant un polytétrahydrofuranne ou polycarbonate diol.

12. Composition selon l'une quelconque des revendications 1 à 11, l'extenseur de chaînes étant choisi dans le groupe constitué par le 1,3-propanediol, le 1,4-butanediol, le 1,5-pentanediol, le 1,6-hexanediol, plus préférablement l'extenseur de chaînes étant le 1,3-propanediol ou le 1,4-butanediol, le plus préférablement le 1,3-propanediol.

13. Utilisation d'une composition selon l'une quelconque des revendications 1 à 12 dans un système d'élévateur.

14. Procédé de moulage par injection, de calandrage, de frittage de poudre, ou extrusion de la composition selon l'une quelconque des revendications 1 à 12 pour former un article.

15. Article comprenant une composition selon l'une quelconque des revendications 1 à 12 ou obtenu par le procédé selon la revendication 14.
